# EUROPEAN PATENT SPECIFICATION

(11) **EP 2 540 394 B1**
(45) Date of publication and mention of the grant of the patent: **04.05.2016**
(21) Application number: 11171503.3
(22) Date of filing: 27.06.2011
(51) Int. Cl.: B01F 15/00, B02C 19/00, B01F 13/10, B01F 7/16, B01L 3/00, B02C 19/22, G01N 1/28

(54) **Device for fragmenting tissue**
Vorrichtung zum fragmentieren von Gewebe
Dispositif pour fragmenter un tissu

(43) Date of publication of application: 02.01.2013
(73) Proprietor: Miltenyi Biotec GmbH, 51429 Bergisch Gladbach (DE)
(72) Inventor: Peters, Ralf-Peter Dr., 51429 Bergisch Gladbach (DE); Kabaha, Eiad Dr., 51429 Bergisch Gladbach (DE); Stöters, Wolfgang, 51429 Bergisch Gladbach (DE); Winkelmayer, Gerhard, 51381 Leverkusen (DE); Bucher, Franz G., 6300 Zug (CH)
(74) Representative: Kisters, Michael Marcus

(56) References cited:
- WO-A1-2006/076819
- WO-A1-2006/076820
- WO-A1-2006/081694
- US-A1- 2006 245 298

## Description

### Device for fragmenting tissue

The present invention relates to a device for fragmenting, mixing or homogenizing biological samples like tissue.

### Prior art

Devices for tissue fragmentation are known. For example, WO 2006/081694 A1 and WO 2004/035191 disclose a one-way mixer and homogenizer for biological samples, comprising a tubular laboratory test vessel with a processing element having cutting and/or grinding elements.

The disadvantage of this device is when processing fibrous or chord-containing substances like muscle tissue, the degree of fragmentation is insufficient. The centrifugal forces generated by the agitator presses the substances to be fractionated against the laboratory vessel where they can not be sufficiently grinded, resulting in too large particles and/or an inhomogeneous processed material.

### Object of the invention

It was therefore an object of the present invention to provide an improved device for fragmenting, mixing or homogenizing biological samples.

It was found that with a device in which the accumulation of sample material at the walls of the laboratory vessel is prevented, samples can be homogeneously fractionated to low particles sizes.

Accordingly, the first object of the invention is a device suitable for fragmenting or homogenizing biological samples, according to the subject-matter of claim 1.

The device can be used to process (fractionate, grind or homogenize) biological samples or biological material like tissue for research, laboratory use, diagnosis or pathology proposes. The biological samples or biological material may have any consistency and can originate form any animal, human or plant tissue like muscle, inner organs like heart or lung, brain or parts of plants like grain.

In the device of the invention, the substances are forced by rotation of a helically shaped transportation element (8) past and over the processing tool (5) comprising a plurality of teeth-like structures (4a-c) and at least one outer cutting blade (6) located at the periphery of the processing tool (5) until the desired particle size or consistency of the product is achieved.

It is furthermore an object of the invention to provide a process for extracting, fragmenting, mixing or homogenizing biological samples in a device of the invention, wherein the agitating element (11) is rotated relative to the closing lid (2) and the processing tool (5), thereby guiding the transportation element (8) over at least one group of teeth (4 a-c) and at least one outer cutting blade (6) through slots (6a) of the transportation element (8) in a grinding and cutting manner.

The rotation of the agitating element (11) and the transportation element (8) relative to the closing lid (2) and the processing tool (5) is conducted by coupling a drive motor to the engaging portion (16) of the guidance tube (13). The agitating element (11) and the transportation element (8) are put in rotation by the drive motor via guidance tube (13), whereas the closing lid (2), the processing tool (5) and the vessel (1) remain idle.

During the process of the invention, the guidance tube (13) and the agitating element (11) are rotated against the processing tool (5) at 20 to 4000 rpm.

Processing time varies depending on the desired particle size, the mechanical resistance of the sample and the rotational speed of the agitating element (11) and the transportation element (8). Typical processing time is between 1 and 30 minutes.

### BRIEF DESCRIPTION OF THE DRAWINGS

Fig. 1: cross-sectional view of the device of the invention with laboratory test vessel (1), lid (2) and processing tool (5) assembled.
Fig. 2: same device of the invention as shown in Fig.1, view rotated 90 °
Fig. 3: side and top view of lid (2) with processing tool (5) and agitating element (11).

### DETAILED DESCRIPTION OF THE PREFERRED EMBODIMENTS

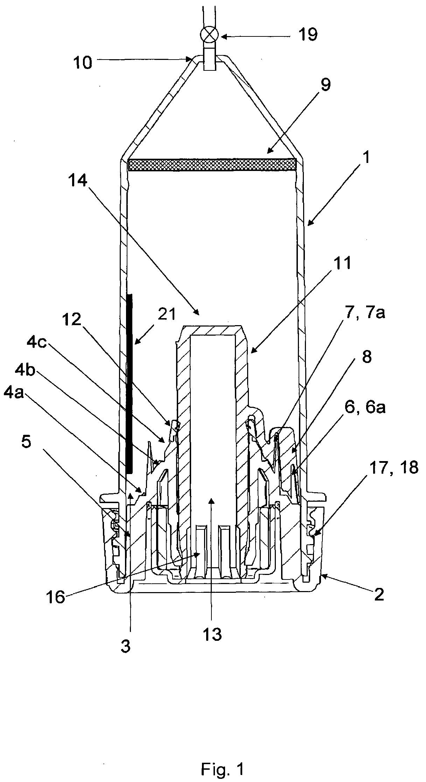

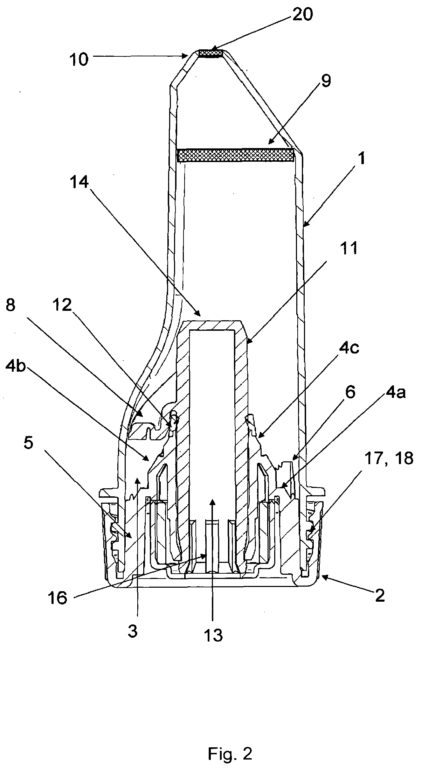

The device of the invention as for example shown in Fig. 1 and 2 is opened by screwing the lid (2) from the laboratory test vessel (1). Then, the biological sample to be processed is inserted into the vessel (1) through opening (3). After closing the vessel with lid (2), the device is placed by the guidance tube (13) into the drive shaft of a not shown motorized drive. By rotation of the drive shaft, the substance to be processed is guided or forced over at least one group of teeth 4 a-c and outer cutting blades (6) by transportation element (8). When the desired fragmenting or homogenization degree of the biological sample is achieved, the drive motor is stopped and the device is removed from the drive. The fractionated substance can then be removed from the vessel (1) by opening the lid (2).

For further improvement of the fragmenting process, the processing tool (5) preferable comprises at least one inner cutting blade (7) located between the outer cutting blades (6) and the guidance tube (13).

In this embodiment of the invention, the transportation element (8) is provided with appropriate slots (7a), fitting the inner cutting blades (7).

The description "inner" and "outer" cutting blades is directed to the location of the cutting blades with respect to the rotational axis of the device, i.e. to the guidance tube (13) of the agitating element (11). The "inner" position is nearer to the rotational axis of the device whereas the "outer" position is at the periphery of the processing tool (5).

The resulting degree of fragmentation or the particle size of the fragmented substances depend on the rotational speed of the agitation element (11), the processing time and the grinding or cutting efficiency of the teeth and/or the cutting blades.

If small particles, cell matter or cellular molecules like DNA or proteins shall be isolated from the biological sample, fragmentation needs to be as intense as possible and no care must be taken to maintain cell integrity. In this embodiment of the invention, the space between teeth (4a-c) and the corresponding surfaces of the agitation element (11) and/or the transportation element (8) can be as narrow as possible for example between 0 and 75 µm, especially between 1 and 50 µm or between 1 and 20 µm.

If the process and the device of the invention are used to obtain isolated living cells by breaking the cell structure of the biological samples, the fragmentation needs to be adjusted to a more cautious processing.

In this embodiment of the invention, the space between the teeth (4a-c) and the corresponding surfaces of the agitation element (11) and/or the transportation element (8) is adjusted to at least 100 µm, especially 100 to 300 µm in order to prevent cells from being grinded. This can be accomplished by providing either the teeth (4a-c) with spacer elements to the transportation element (8) and/or vice versa. The spacer elements may have the shape of dots with a height of at least 100 µm, preferable 100 to 300 µm and especially 100 to 200 µm and are produced from the same material as the elements they are located on. Preferable, the spacer elements are manufactured with the elements they are located on.

Additional to spacer elements on the teeth (4a-c) or the transportation element (8), the inner (7) and outer (6) cutting blades may comprise spacer elements to the respective slots (6a, 7a) of the transportation element (8) too. Of course, the spacer elements may also be attached to the slots (6a, 7a) of the transportation element (8) against the inner (7) and outer (6) cutting blades.

For separating unprocessed components still contained in the sample material from fragmented or homogenized substances, the device of the invention can comprise a sieve. The sieve divides the processing space in the laboratory test vessel into a bottom space and a space at the closing lit. After processing, the sample material can be sieved to separate processed material with the desired fragmentation degree from unprocessed material with a too large particle size.

Accordingly, in a further embodiment of the invention, the device according to the invention comprises a sieve (9) which is located in the laboratory test vessel (1) at a distance from a bottom (10) thereof such that a bottom space is separated from a space at the closing lid. The periphery of the sieve (9) contacts the interior wall of the vessel (1) in a sealing manner.

The sieve (9) may be mechanical stable or can be penetrable or pierceable by the tip of a pipette. As such, the sieve may comprise only an area like a spot penetrable by the tip of a pipette, for example by predetermined breaking points or lines.

The sieve (9) may be a perforated plate, a membrane or one or more wire or plastic grids positioned overtop of each other. Screen sizes are not particular important and can vary in broad ranges.

After processing, this variant of the device is turned such that the lid (2) is on the top and the processed substance flows through the sieve (9) to the bottom (10) of the vessel, which is preferable shaped as a sump. Coarse parts are held back by the sieve (9). The fragmented and filtered substance can be removed from the vessel by opening the device and piercing for example a pipette through the sieve. After the sample is taken, the vessel may be closed again by lid (2) for storing the remaining homogenized product.

In a further embodiment of the invention, the tubular laboratory test vessel (1) comprises a closable orifice (19 in Fig. 1) like a stopcock preferable with "Luer" connector. The closable orifice (19) may be located at any place of the vessel (1), depending on the further processing of the sample with vessel (1), for example in a centrifuge. Preferable, the closable orifice (19) is located at the bottom (10) of the vessel (1).

The closable orifice (19) may be used as an input/output port for the vessel (1) to introduce gases, liquids or processing aids like enzymes into the vessel or to retrieve processed material from the vessel.

The device of the invention may comprise a closable orifice and a sieve. In this embodiment, the sieve does not need to be penetrated for removal of the fractionated and sieved material. The processed material can be removed without opening of the device through the closable orifice which is in this variant located at the bottom (10) of the vessel.

In alternative or addition to a closable orifice (19), the tubular laboratory test vessel (1) may comprise a non-closable orifice (20 in Fig. 2) which is sealed by a pierceable or penetrable element like a membrane or a thin film. The non-closable orifice may be opened by penetrating the seal with a tool like a pipette after processing, but can not be closed again.

The non-closable orifice (20) may be located at any place of the vessel (1), depending on the further use or further processing of the sample or the vessel (1). Preferable, the non-closable orifice (20) is located at the bottom (10) of the vessel (1).

During the fragmentation process of the invention, the sample heats up due to mechanical forces of the transportation / agitation element. The rise of temperature leads to a pressure increase inside the vessel which is preferable equalized by a venting means. In another embodiment of the invention, the laboratory test vessel (1) and/or the agitation element (11) comprise a venting means for pressure compensation.

The venting means can for example a gas permeable membrane or a means for pressure compensation which is not gas permeable like a balloon-like object.

In a first variant of this embodiment, the closable orifice (19) is used as venting means. This can be accomplished by simply opening the closable orifice (19) during the process of the invention in order to discharge any pressure from inside the device to the surrounding atmosphere. The closable orifice (19) may be equipped with a membrane or sieve permeable for gases for this purpose. It is furthermore possible to equip the closable orifice (19) with a means for pressure compensation which is not gas permeable like a balloon-like object.

In a second variant of this embodiment, the non-closable orifice (20) is used as venting means by sealing the non-closable orifice (20) with a pierceable/penetrable and gas permeable membrane.

In a third variant of this embodiment, the venting means is provided by a gas permeable element integrated into the agitating element (11) for example in the end of the guidance tube (13) facing away from the lid (2). For example, the venting means can be provided in shape of a cap (14) made from gas permeable material. In alternative, agitating element (11), guidance tube (13) or cap (14) can comprise a means for pressure compensation which is not gas permeable like a balloon-like object.

The gas permeable material may be in form of a membrane made from PTFE or polyamide, preferable in an aseptic condition.

Closing lid (2) of the device may be a screw cap, but lids with a snap or bayonet closing mechanism may employed too. The screw cap lid (2) comprises an internal thread (17) fitting into an appropriate external thread (18) of the vessel (1). The threads and/or the lid (2) and/or the tubular laboratory test vessel (1) comprises preferable a tab location or snap-in point to indicate the user that the device is firmly closed and further torque is unnecessary.

The fragmentation or homogenisation efficiency of the device can be further increased by providing the inner surface of the tubular laboratory test vessel (1) with at least one fin or ridge (21 in Fig. 1). The fin or ridge (21) extends from the opening (3) in direction to the bottom (10) of the vessel (1) in an area above the agitating element (11) i.e. in an area where the sample material will flow during processing. The fin or ridge (21) is arranged as close as possible to the transportation element (8) without interfering with the agitator (11) and extends for example up to the height of the cap (14) of the agitator (11). Such structures act as vortex breakers, flow breakers or baffles for the samples during processing.

In another embodiment of the invention, the inner surface of the vessel (1) is at least in part provided with a hydrophobic coating. The hydrophobic coating ensures that after processing, the sample is recovered with minimum loss during emptying of the vessel. The hydrophobic surface can be obtained by either producing the vessel from hydrophobic material or coating at least a part of the inside surface of the vessel with hydrophobic material. Suitable hydrophobic materials are fluorinated polymers like PTFE.

The vessel may have a tubular shape with a inner diameter of 1 to 5 cm and a volume of 20 to 200 ml.

The device of the invention is produced preferably from polymers like polypropylene, polyethylene, polyamide, polyethylene terephthalate (PET) or PTFE. The vessel, lid, agitating device, processing and the transporting device can be produced from the same or different material. The seals and the membranes are produced from elastomers like silicone or fluorinated rubber.

### DETAILED DESCRIPTION OF THE FIGURES AND PREFERRED EMBODIMENTS

Fig. 1 and 2 show the device of the invention with laboratory test vessel (1) in upside-down position, i.e. with the bottom (10) of the laboratory test vessel (1) on top and the lid (2) closing the opening (3) of the laboratory test vessel (1) pointing downwards. Closing lid (2) is shown as screw cap with an internal thread (17) fitting into an external thread (18) of the vessel (1).

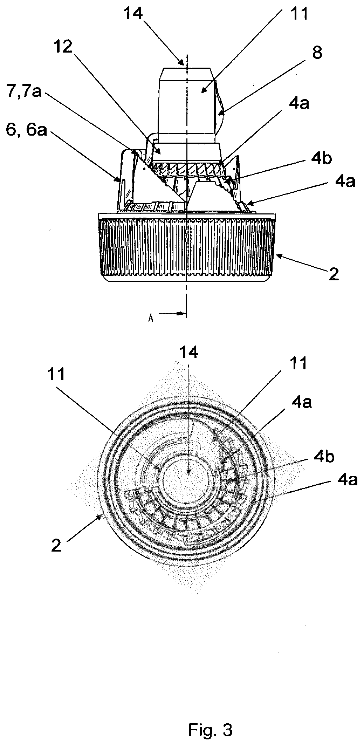

Processing tool (5) is mounted to the lid (2) in a rotation-proof manner, preferable formed integrally with the lid. The processing tool (5) comprises a multitude of teeth (4 a-c), arranged in one or more axially off-set planes in reference to each other. Fig. 1 - 3 show by way of example three groups of teeth, arranged axially on the processing tool (5) behind each other and having the form of conical wheels. The number of groups of teeth is not particular limited and can range between 1 and 10.

The lowermost positioned row of teeth (4a) can have a longer distance from the second lowermost row (4b) such that inner cutting blades (7) can be placed between the rows of teeth.

The processing tool (5) comprises a central bore serving as a gliding bearing for a guidance tube (13) of the agitating element (11). At the end facing the lid, this bearing bore can be provided with a rib pointing inwardly, engaging an encircling groove at the guidance tube (13) for axially guiding the latter. At the upper end of the bore in the processing tool (5), a hydraulic seal (12) is provided.

The end of the guidance tube (13) facing away from the lid (2) can be provided in shape of a cap (14) having, for example, a conically extending tip or an inclined plane in order to cause material resting thereupon during processing to automatically glide off and be guided back to the teeth (4a-c).

The cap (14) can be manufactured as not penetrable on purpose for example by a pipette. In this embodiment, cap (14), the tip and the guidance tube (13) are preferable produced from the same material and/or formed integrally with each other, for example in a one-component method like injection moulding.

In another embodiment of the invention, the cap (14) is formed such that it can be penetrated by an appropriate tool like a pipette. For this purpose, the cap (14) or the tip of the cap can be provided with a predetermined breaking point or may be made from an elastic material like silicon or a gas permeable membrane made from PTFE.

At the periphery of the agitating element (11), transportation element (8) extends with a helical form. The inner surface of transportation element (8) is guided past the crowns of the teeth (4a-c) in a grinding and cutting manner. In addition, when the agitating element (11) is rotated relative to the processing tool (5), the transportation element (8) passes over the cutting blades to further grind and cut the substances to be fractionated.

At the periphery (the outermost position) of the processing tool (5), in close proximity of the laboratory vessel, at least one outer cutting blade (6) is located. The outer cutting blade (6) ensures that the biological samples which are moved during processing against the laboratory vessel by rotation of the agitator (11) do not evade the fractionating process, but are subject to further fragmenting. To enhance the fractionating process, the transportation element (8) comprises outer slots (6a) fitting the outer cutting blades (6). The substances to be fractionated are cut by the cutting blades and the slots of transportation element (8) during rotation of the agitation element (11) into increasingly smaller pieces.

In a preferred embodiment of the invention, the processing tool comprises in addition to the outer cutting blade (6) at least one inner cutting blade (7). The transportation element (8) is preferable provided with one or more inner slots (7a) fitting to the inner cutting blade (7). The combination of inner and outer cutting blades (6) and (7) allow a coarse fragmenting of the sample.

Since the processing tool may have a plurality of groups of teeth, it is possible to locate a plurality of inner cutting blades (7) between two groups of teeth, for example between (4a) and (4b). The figures show a preferred embodiment of the invention with three groups of teeth, one set of at least one inner cutting blade (7) located between the outer and middle group of teeth and one set of at least one outer cutting blade (6) located at the periphery (the outermost position) of the processing tool (5). The transportation element (8) is equipped with one or more inner (7a) and outer slots (6a) fitting to the cutting blades during rotation of the agitation element (11).

The guidance tube (13) and/or the agitating element (11) with the transportation element (8) are put into rotation by an external drive motor (not shown in Fig. 1 - 3), with its drive shaft engaging through the lid (2) into guiding tube (13). The formfitting entraining of the guidance tube (13) is ensured by cuts (16) arranged at its bore.

The embodiment of the invention with a sieve is shown in Fig 1 and 2, wherein sieve (9) is inserted at the bottom end of the laboratory test vessel (1).

The base (10) of the laboratory test vessel (1) can be level or bossed or, as shown in Fig. 1, be formed as sump. Optionally, base (1) is provided with a closable orifice (19) as shown in Fig. 1 or a non-closable orifice (20) as shown in Fig. 2.

In order to increase the effectiveness of the transportation element (8), the casing of the vessel (1) narrows by an angle of 120°, for example, with the upper end of the narrowed section may form a chord in the vessel (1). This embodiment is shown in Fig. 2.

### Examples

Lung and heart tissue from mice where homogenized with a device according to the invention (Ex1-Ex5, as shown in to Fig. 1 and 2) and with the homogenization and mixing chamber disclosed in WO2006/081694 (C1-C3, not according to the invention).

For this propose, the tissue was first washed in PBS buffer and then introduced with 2,5 ml PBS buffer into the devices, both equipped with a penetratable sieve having a mesh size of 0,6 x 0,6 mm, but without orifices and venting means. The devices were engaged by the gentleMacs© (Miltenyi Biotec GmbH) hardware and operated with the build-in gentleMacs© programs/protocol "Heart_01" (H_01) and "Lung_01" (L_01) or set-up of rotational speeds of the device. After fragmentation, the material was sieved and removed from the vessels by penetrating the sieve with a pipette.

The obtained material was evaluated by visual assessment (VA) on a 1 to 4 range (4: best, 1: worst). The average particle size (APS) in [mm] was determined by visual comparing of the processed tissue with standard particles having a known particle size. Before and after processing, the sieve was removed from device, dried and weighted in order to calculate the unprocessed sample i.e. sample material which was not processed to a particle size small enough to the pass the sieve. Unprocessed material remaining on the sieve is calculated as "residue" in [mg] or % to the original sample weight.

The results for heart and lung tissue originating from mice are compiled in the following tables 1 and 2.

**Table 1/ Heart**

| **No** | **Rpm/ program** | **sample weight [mg]** | **Residue [mg]** | **Residue [%]** | **APS [mm]** | **VA** |
|---|---|---|---|---|---|---|
| Ex 1 | 500 | 107,3 | 56,8 | 52,94 | 2,6 | 4 |
| C1 | 500 | 98,8 | 96,3 | 97,47 | 8,0 | 1 |
| Ex 2 | H_01 | 96,7 | 13,4 | 13,86 | 0,5 | 4 |
| C2 | H_01 | 106,1 | 100,4 | 94,63 | 8,0 | 1 |
| Ex 3 | H_01 | 102,9 | 14,9 | 14,48 | 0,5 | 4 |
| C3 | H_01 | 106,0 | 75,8 | 71,51 | 3,9 | 3 |
| Ex 4 | H_01 | 93,6 | 12,1 | 12,93 | 0,5 | 4 |
| Ex 5 | H_01 | 99,8 | 11,9 | 11,92 | 0,5 | 4 |

**Table 2 / Lung**

| **No** | **Rpm / program** | **sample weight [mg]** | **Residue [mg]** | **Residue [%]** | **APS [mm]** | **VA** |
|---|---|---|---|---|---|---|
| Ex6 | 500 | 132,5 | 76,8 | 57,96 | 3,9 | 4 |
| C6 | 500 | 126,1 | 116,9 | 92,70 | 5,0 | 1 |
| Ex7 | L_01 | 135,6 | 26,9 | 19,84 | 0,5 | 4 |
| C7 | L_01 | 148,5 | 103,7 | 69,83 | 2,3 | 1 |
| Ex8 | L_01 | 129,6 | 21,0 | 16,2 | 0,5 | 4 |
| C8 | L_01 | 163,5 | 86,7 | 53,03 | 2,1 | 3 |
| Ex9 | L_01 | 128,7 | 16,4 | 12,74 | 0,5 | 4 |
| Ex10 | L_01 | 131,1 | 29,2 | 14,65 | 0,5 | 4 |

The tissue fragmented with the mixing chamber disclosed in WO2006/081694 (C1-C3) show higher average particle size, resulting in a much higher residue withhold by the sieve. Accordingly, the yield obtained is rather low and the visual assessment is bad.

Tissue fragmented with the device according to the invention has a much lower average particle size, resulting in less residue lost on the sieve and a much higher yield of cells. The visual assessment is good in all experiments indicating a homogenous fragmentation product.

## Claims

1. Device for fragmenting or homogenizing biological samples, comprising:
- a tubular laboratory test vessel (1) having an open first end (3) and a second end closed by a bottom (10);
- a closing lid (2) for the laboratory test vessel (1) connected to the open end (3) of the laboratory test vessel (1);
- a processing tool (5) arranged in said closing lid (2), comprising a plurality of teeth (4a-c) and an agitating element (11) having a guidance tube (13) that is rotatably mounted through a central bore in the lid (2) and includes an engagement portion (16) that is adapted to be engaged by a drive motor;
**characterized in**
- three groups of teeth, wherein one set of at least one inner cutting blade (7) is located between the outer and middle group of teeth and one set of at least one outer cutting blade (6) is located at the periphery, the outermost position, of the processing tool (5) and
- a transportation element (8) arranged at the guidance tube (13) that extends outwardly in a helical shape over the outer cutting blade (6) and which is / provided with slots (6a) fitting the outer cutting blades (6).

2. Device according to Claim 1, wherein the transportation element (8) is provided with slots (7a) fitting the inner cutting blades (7)

3. Device according to claim 1 or 2, further comprising a venting means for pressure compensation (14).

4. Device according to any of the claim 1 to 3, wherein the agitating element (11) comprises a top cap (14) which is manufactured from the same material as the agitating element (11).

5. Device according to any of the claim 1 to 4, further comprising a sieve (9), located in the laboratory test vessel (1) at a distance from the bottom (10) such that a bottom space is separated from a space at the closing lid (2).

6. Device according to claim 5, wherein the sieve (9) is pierceable or penetrable or comprises an area pierceable or penetrable by the tip of a pipette.

7. Device according to any of the claims 1 to 6, wherein the tubular laboratory test vessel (1) comprises a closable orifice (19).

8. Device according to any of the claims 1 to 6, wherein the tubular laboratory test vessel (1) comprises a non-closable orifice (20).

9. Device according to any of the claims 1 to 8, wherein the teeth (4a-c) comprise spacer elements to the transportation element (8).

10. Device according to any of the claims 1 to 8, wherein the transportation element (8) comprise spacer elements to the teeth (4a-c).

11. Device according to any of the claims 1 to 10, wherein the lid (2) and/or the tubular laboratory test vessel (1) comprises a tab location or snap-in point.

12. Device according to any of the claims 1 to 11, wherein the tubular laboratory test vessel (1) comprises at the inside at least one fin or ridge (21).

13. A process for extracting, fragmenting, mixing or homogenizing biological samples in a device according to any of the claims 1 to 12 wherein the agitating element (11) is rotated relative to the closing lid (2) and the processing tool (5), thereby guiding the transportation element (8) over at least one group of teeth (4 a-c) and at least one outer cutting blade (6) through slots (6a) of the transportation element (8) in a grinding and cutting manner.

## Patentansprüche

1. Vorrichtung zum Fragmentieren oder Homogenisieren biologischer Proben, die folgendes umfasst:
- ein röhrenförmiges Labortestgefäß (1), das ein offenes erstes Ende (3) und ein zweites Ende aufweist, das durch einen Boden (10) verschlossen ist;
- einen Verschlussdeckel (2) für das Labortestgefäß (1), der mit dem offenen Ende (3) des Labortestgefäßes (1) verbunden ist;
- ein Verarbeitungswerkzeug (5), das in dem Verschlussdeckel (2)angeordnet ist, das eine Vielzahl von Zähnen (4 a-c) umfasst sowie ein Rührelement (11), das ein Führungsrohr (13) aufweist, das drehbar durch eine zentrale Bohrung in dem Deckel (2) angebracht ist und einen Kupplungsanteil (16) umfasst, der dazu geeignet ist, von einem Antriebsmotor eingerastet zu werden;
**gekennzeichnet durch**,
- drei Gruppen von Zähnen, wobei sich ein Satz von mindestens einer inneren Schneideklinge (7) zwischen der äußeren und der mittleren Gruppe von Zähnen befindet und sich ein Satz von mindestens einer äußeren Schneideklinge (6) an der Peripherie, der äußersten Position des Verarbeitungswerkzeuges (5) befindet und
- ein Transportelement (8), das am Führungsrohr (13) angeordnet ist, welches nach außen in einer Spiralform über die äußere Schneideklinge (6) ragt und das mit Schlitzen (6a) versehen ist, die zu den äußeren Schneidklingen (6) passen.

2. Vorrichtung nach Anspruch 1, wobei das Transportelement (8) mit Schlitzen (7a) versehen ist, die zu den inneren Schneideklingen (7) passen.

3. Vorrichtung nach Anspruch 1 oder 2, die ferner eine Entlüftungsvorrichtung zum Druckausgleich (14) umfasst.

4. Vorrichtung nach einem der Ansprüche 1 bis 3, wobei das Rührelement (11) eine obere Kappe (14) umfasst, die aus demselben Material wie das Rührelement (11) hergestellt ist.

5. Vorrichtung nach einem der Ansprüche 1 bis 4, die ferner ein Sieb (9) umfasst, das sich in dem Labortestgefäß (1) in einem Abstand vom Boden (10) befindet, so dass ein Bodenraum von einem Raum am Verschlussdeckel (2) getrennt ist.

6. Vorrichtung nach Anspruch 5, wobei das Sieb (9) durchstechbar oder durchdringbar ist oder einen Bereich umfasst, der durchstechbar oder durchdringbar von der Spitze einer Pipette ist.

7. Vorrichtung nach einem der Ansprüche 1 bis 6, wobei das röhrenförmige Labortestgefäß (1) eine verschließbare Öffnung (19) umfasst.

8. Vorrichtung nach einem der Ansprüche 1 bis 6, wobei das röhrenförmige Labortestgefäß (1) eine nichtverschließbare Öffnung (20) umfasst.

9. Vorrichtung nach einem der Ansprüche 1 bis 8, wobei die Zähne (4 a-c) Abstandelemente zu dem Transportelement (8) umfassen.

10. Vorrichtung nach einem der Ansprüche 1 bis 8, wobei das Transportelement (8) Abstandelemente zu den Zähnen (4 a-c) umfasst.

11. Vorrichtung nach einem der Ansprüche 1 bis 10, wobei der Deckel (2) und/oder das röhrenförmige Labortestgefäß (1) eine Einrastposition oder einen Einschnapppunkt umfasst.

12. Vorrichtung nach einem der Ansprüche 1 bis 11, wobei das röhrenförmige Labortestgefäß (1) an der Innenseite zumindest eine Rippe oder einen Steg (21) aufweist.

13. Verfahren zum Extrahieren, Fragmentieren, Mischen oder Homogenisieren biologischer Proben in einer Vorrichtung nach einem der Ansprüche 1 bis 12, wobei das Rührelement (11) relativ zu dem Verschlussdeckel (2) und dem Verarbeitungswerkzeug (5) gedreht wird, wodurch das Transportelement (8) über mindestens eine Gruppe von Zähnen (4 a-c) und mindestens eine äußere Schneideklinge (6) durch Schlitze (6a) des Transportelements (8) in einer mahlenden und schneidenden Weise geführt wird.

## Revendications

1. Dispositif de fragmentation ou d'homogénéisation d'échantillons biologiques, comprenant :
- un récipient tubulaire de test de laboratoire (1) ayant une première extrémité ouverte (3) et une seconde extrémité fermée par un fond (10) ;
- un couvercle de fermeture (2) pour le récipient de test de laboratoire (1) raccordé à l'extrémité ouverte (3) du récipient de test de laboratoire (1) ;
- un outil de traitement (5) disposé dans ledit couvercle de fermeture (2), comprenant une pluralité de dents (4a-c) et un élément agitateur (11) ayant un tube de guidage (13) qui est monté rotatif à travers un alésage central dans le couvercle (2) et comprend une partie de mise en prise (16) qui est conçue pour être mise en prise par un moteur d'entraînement ;
**caractérisé en ce que**
- trois groupes de dents, dans lequel un ensemble d'au moins une lame de coupe intérieure (7) est situé entre les groupes de dents extérieur et intermédiaire et un ensemble d'au moins une lame de coupe extérieure (6) est situé au niveau de la périphérie, la position extérieure, de l'outil de traitement (5), et
- un élément de transport (8) agencé au niveau du tube de guidage (13) qui s'étend vers l'extérieur en une forme hélicoïdale sur la lame de coupe extérieure (6) et qui est doté de fentes (6a) correspondant aux lames de coupe extérieures (6).

2. Dispositif selon la revendication 1, dans lequel l'élément de transport (8) est doté de fentes (7a) correspondant aux lames de coupe intérieures (7).

3. Dispositif selon la revendication 1 ou 2, comprenant en outre un moyen de ventilation pour la compensation de pression (14).

4. Dispositif selon l'une quelconque des revendications 1 à 3, dans lequel l'élément agitateur (11) comprend un capuchon supérieur (14) qui est fabriqué avec le même matériau que l'élément agitateur (11).

5. Dispositif selon l'une quelconque des revendications 1 à 4, comprenant en outre un crible (9), situé dans le récipient de test de laboratoire (1) à une certaine distance du fond (10) de telle sorte qu'un espace inférieur est séparé d'un espace au niveau du couvercle de fermeture (2).

6. Dispositif selon la revendication 5, dans lequel le crible (9) peut être percé ou pénétré ou comprend une zone pouvant être percée ou pénétrée par la pointe d'une pipette.

7. Dispositif selon l'une quelconque des revendications 1 à 6, dans lequel le récipient tubulaire de test de laboratoire (1) comprend un orifice refermable (19).

8. Dispositif selon l'une quelconque des revendications 1 à 6, dans lequel le récipient tubulaire de test de laboratoire (1) comprend un orifice non refermable (20).

9. Dispositif selon l'une quelconque des revendications 1 à 8, dans lequel les dents (4a-c) comprennent des éléments écarteurs relativement à l'élément de transport (8).

10. Dispositif selon l'une quelconque des revendications 1 à 8, dans lequel l'élément de transport (8) comprend des éléments écarteurs relativement aux dents (4a-c).

11. Dispositif selon l'une quelconque des revendications 1 à 10, dans lequel le couvercle (2) et/ou le récipient tubulaire de test de laboratoire (1) comprend un emplacement pour languette ou un point d'encliquetage.

12. Dispositif selon l'une quelconque des revendications 1 à 11, dans lequel le récipient tubulaire de test de laboratoire (1) comprend à l'intérieur au moins une ailette ou une nervure (21).

13. Procédé d'extraction, de fragmentation, de mélange ou d'homogénéisation d'échantillons biologiques dans un dispositif selon l'une quelconque des revendications 1 à 12, dans lequel l'élément agitateur (11) est entraîné en rotation relativement au couvercle de fermeture (2) et à l'outil de traitement (5), guidant ainsi l'élément de transport (8) sur au moins un groupe de dents (4a-c) et au moins une lame de coupe extérieure (6) à travers les fentes (6a) de l'élément de transport (8) selon un mode de broyage et de coupe.
